# EUROPÄISCHE PATENTSCHRIFT

(11) **EP 3 785 068 B1**
(45) Veröffentlichungstag und Bekanntmachung des Hinweises auf die Patenterteilung: **10.05.2023**
(21) Anmeldenummer: 18726926.1
(22) Anmeldetag: 24.04.2018
(51) Int. Cl.: G02B 27/09, H05G 2/00

(54) **REFLEKTIERENDES OPTISCHES ELEMENT, STRAHLFÜHRUNGSEINRICHTUNG UND EUV-STRAHLUNGSERZEUGUNGSEINRICHTUNG**
REFLECTIVE OPTICAL ELEMENT, BEAM GUIDING DEVICE AND EUV-BEAM GENERATING DEVICE
ÉLÉMENT OPTIQUE RÉFLÉCHISSANT, DISPOSITIF DE GUIDAGE DE FAISCEAU ET DISPOSITIF DE GÉNÉRATION DE RAYONNEMENT EUV

(43) Veröffentlichungstag der Anmeldung: 03.03.2021
(73) Patentinhaber: TRUMPF Lasersystems for Semiconductor Manufacturing GmbH, 71254 Ditzingen (DE)
(72) Erfinder: LAMBERT, Martin, 71404 Korb (DE); ERGIN, Tolga, 74321 Bietigheim-Bissingen (DE)
(74) Vertreter: Kohler Schmid Möbus Patentanwälte
(86) Internationale Anmeldenummer: PCT/EP2018/060412
(87) Internationale Veröffentlichungsnummer: WO 2019/206399

(56) Entgegenhaltungen:
- WO-A1-2015/028103
- WO-A1-2015/036025
- WO-A1-2015/110238
- GB-A- 2 062 282

## Beschreibung

Die vorliegende Erfindung betrifft eine EUV-Strahlungserzeugungseinrichtung.

Für die Begrenzung des Strahlquerschnitts bzw. des Strahldurchmessers eines auf ein reflektierendes optisches Elements einfallenden und/oder an diesem reflektierten Lichtstrahls, insbesondere eines Laserstrahls, werden typischerweise Blenden verwendet. Derartige Blenden absorbieren die außerhalb des durch die BlendenÖffnung vorgegebenen Strahlquerschnitts auftreffende Leistung des Lichtstrahls. Steht kein Bauraum für eine Blende zur Verfügung, ist die Intensität des einfallenden Lichtstrahls so hoch, dass die Blende ggf. zerstört werden kann oder sprechen andere Gründe dafür, keine Blende für die Begrenzung des Strahlquerschnitts zu verwenden, ist es erforderlich, den Strahlquerschnitt des Lichtstrahls auf andere Weise zu begrenzen oder den Strahlquerschnitt so klein zu wählen, dass dieser nicht auf Bauteile trifft, die nicht beleuchtet werden sollen. Wird der Strahlquerschnitt nicht begrenzt, kann dies zu unerwünschten Reflexionen an diesen Bauteilen und/oder zu einer unerwünschten Erwärmung dieser Bauteile führen. Letzteres kann beispielsweise eine unerwünschte Verlagerung der Bauteile durch eine Wärmeausdehnung zur Folge haben, die zu Aberrationen führen kann.

Aus der WO 2015/036025 A1 ist eine Strahlführungseinrichtung bekannt geworden, bei der ein erster Laserstrahl und ein zweiter Laserstrahl, die unterschiedliche Wellenlängen aufweisen, an einer gemeinsamen Überlagerungseinrichtung zur gemeinsamen Strahlführung in Richtung auf einen Zielbereich überlagert werden. Bei der Überlagerungseinrichtung kann es sich um ein reflektierendes optisches Element handeln, welches einen ersten Flächenbereich zur Reflexion des ersten Laserstrahls und einen zweiten Flächenbereich zur Reflexion des zweiten Laserstrahls aufweist.

In der GB 2 062 282 A ist ein Beleuchtungssystem zur Umverteilung von einfallendem Laserlicht mit einer nicht-uniformen Intensitätsverteilung in Strahlung mit einer engeren, gewünschten Intensitätsverteilung in einem vorgegebenen Bereich einer Ausgangsebene beschrieben. Zu diesem Zweck weist das Beleuchtungssystem einen Reflektor auf, der eine Umlenkfläche aufweist, um zumindest einen Teil des einfallenden Laserlichts umzuverteilen.

### Aufgabe der Erfindung

Der Erfindung liegt die Aufgabe zugrunde, eine EUV-Strahlungserzeugungseinrichtung mit einer Strahlführungseinrichtung bereitzustellen, welche den Strahlquerschnitt bzw. den Strahldurchmesser eines Laserstrahls ohne die Verwendung einer Blende begrenzt.

### Gegenstand der Erfindung

Ein Aspekt der Erfindung betrifft eine EUV-Strahlungserzeugungsvorrichtung, umfassend: eine Strahlquelle zur Erzeugung eines Laserstrahls, eine Strahlführungseinrichtung, umfassend: mindestens ein reflektierendes optisches Element, umfassend: einen ersten, inneren Flächenbereich zur Reflexion eines ersten, inneren Strahlungsanteils des auf das reflektierende optische Element auftreffenden Laserstrahls zur Bildung eines ersten reflektierten Laserstrahls, sowie mindestens einen zweiten, äußeren Flächenbereich zur Reflexion mindestens eines zweiten, äußeren Strahlungsanteils des auftreffenden Laserstrahls zur Bildung mindestens eines zweiten reflektierten Laserstrahls, wobei der zweite Flächenbereich ausgebildet ist, einen Strahlquerschnitt des zweiten reflektierten Laserstrahls relativ zum Strahlquerschnitt des ersten reflektierten Laserstrahls zu reduzieren, so dass der zweite reflektierte Laserstrahl entlang einer Überlagerungs-Länge vollständig innerhalb des ersten reflektierten Laserstrahls verläuft, wobei die Strahlführungseinrichtung weiter umfasst: ein Bauteil, in dem eine Öffnung gebildet ist, wobei die Öffnung des Bauteils sich innerhalb der Überlagerungs-Länge befindet und das reflektierende optische Element derart an die Geometrie der Öffnung angepasst ist, dass der erste reflektierte Laserstrahl durch die Öffnung hindurch treten kann, ohne hierbei auf das Bauteil zu treffen.

Erfindungsgemäß wird vorgeschlagen, die Begrenzung des Strahlquerschnitts des auf das reflektierende optische Element auftreffenden Laserstrahls dadurch zu realisieren, dass die reflektierende Oberfläche des reflektierenden optischen Elements in mindestens zwei Flächenbereiche segmentiert wird. Der erste, innere bzw. zentrale Flächenbereich bildet die Nutzfläche zur Reflexion eines ersten Laserstrahls, welcher den Nutzstrahl bildet. Der mindestens eine radial weiter außen liegende zweite Flächenbereich dient als Separationsfläche, d.h. dieser separiert den zweiten Strahlungsanteil vom ersten Strahlungsanteil. Der zweite Flächenbereich ist zudem ausgebildet, typischerweise geeignet gekrümmt, um den Strahlquerschnitt des auftreffenden zweiten Strahlungsanteils relativ zu dem Strahlquerschnitt des ersten auftreffenden Strahlungsanteils zu reduzieren, so dass der an dem zweiten Flächenbereich reflektierte zweite Laserstrahl in den Strahlengang des ersten reflektierten Laserstrahls hineinläuft und innerhalb einer Überlagerungs-Länge vollständig innerhalb des ersten reflektierten Laserstrahls verläuft.

Auf diese Weise kann verhindert werden, dass in Bezug auf eine Strahlachse des einfallenden Laserstrahls radial außen liegende Strahlungsanteil(e) innerhalb der Überlagerungs-Länge auf Bauteile, insbesondere auf Gehäuse-Bauteile, fallen und dort ungewollt zu einer Erwärmung führen. Es versteht sich, dass ggf. auch Bauteile von den radial weiter außen liegenden Strahlungsanteilen des einfallenden Laserstrahls geschützt werden können, welche im Strahlengang des ersten bzw. zweiten reflektierten Laserstrahls vor oder hinter der Überlagerungs-Länge angeordnet sind. Die Überlagerungs-Länge beschreibt hierbei denjenigen Abschnitt in Ausbreitungsrichtung des ersten Laserstrahls, in dem der zweite Laserstrahls vollständig innerhalb des ersten Laserstrahls verläuft.

Der Laserstrahl trifft in der Regel in seiner Soll-Ausrichtung mittig auf den ersten Flächenbereich auf, d.h. die Strahlachse des auftreffenden Laserstrahls, der beispielsweise einen runden Strahlquerschnitt aufweisen kann, trifft bei der Soll-Ausrichtung auf das Zentrum des ersten Flächenbereichs auf. Der zweite Flächenbereich kann den ersten Flächenbereich ringförmig umgeben, es ist aber auch möglich, dass das reflektierende optische Element zwei oder mehr äußere Flächenbereiche aufweist, die in Bezug auf das Zentrum des ersten Flächenbereichs mehrere ringförmige Bereiche bilden und/oder die in Umfangsrichtung nebeneinander angeordnet sind. In jedem Fall haben der bzw. die zweiten Flächenbereiche entweder eine konvergierende Wirkung auf den einfallenden Laserstrahls die größer ist als die konvergierende Wirkung des ersten Flächenbereichs oder eine divergierende Wirkung, die kleiner ist als die divergierende Wirkung des ersten Flächenbereichs.

Bei einer Ausführungsform ist der zweite Flächenbereich konkav, plan oder konvex gekrümmt. Der zweite Flächenbereich kann beispielsweise konkav gekrümmt sein, z.B. eine konkav gekrümmte Paraboloid-, Hyperboloid- oder Ellipsoid-Fläche bilden. Durch die konkave Krümmung kann der auf den zweiten Flächenbereich des reflektierenden optischen Elements auftreffende Strahlungsanteil des auftreffenden Laserstrahls von einem z.B. im Wesentlichen kollimierten in einen konvergenten Laserstrahl umgewandelt werden. Handelt es sich bei dem zweiten Flächenbereich um eine Paraboloid-Fläche, wird der zweite Strahlungsanteil, der kollimiert auf das reflektierende optische Element auftrifft, typischerweise auf eine Fokusposition fokussiert, die idealerweise innerhalb des Strahlquerschnitts des zweiten reflektierten Laserstrahls liegt. Alternativ kann der zweite Flächenbereich konvex gekrümmt sein und beispielsweise eine Ellipsoid- oder Paraboloid-Fläche bilden; der zweite Flächenbereich kann ggf. auch als plane Fläche ausgebildet sein.

Bei einer weiteren Ausführungsform ist der zweite Flächenbereich zur Fokussierung des zweiten reflektierten Laserstrahls auf eine Fokusposition ausgebildet, die bevorzugt innerhalb des ersten reflektierten Laserstrahls liegt. Der zweite Flächenbereich weist in diesem Fall eine Krümmung auf, die groß genug ist, um den zweiten reflektierten Laserstrahls an einer Fokusposition zu fokussieren, die in der Regel innerhalb des ersten reflektierten Laserstrahls liegt. Die Fokusposition befindet sich in der Regel auf oder in der Nähe der Strahlachse des ersten reflektierten Laserstrahls. Es versteht sich, dass die Lage der Fokusposition so gewählt werden muss, dass sich innerhalb des Strahlwegs bzw. entlang der Ausbreitungsrichtung des nach der Fokusposition divergent verlaufenden zweiten Laserstrahls keine Gehäuseteile oder andere Bauteile befinden, die nicht für das Auftreffen des zweiten Laserstrahls geeignet sind.

Bei einer weiteren Ausführungsform ist der erste Flächenbereich plan, konkav oder konvex gekrümmt. Der erste Flächenbereich kann beispielsweise eine konvex oder konkav gekrümmte Paraboloid-, Hyperboloid- oder Ellipsoid-Fläche bilden. Bei dem ersten Flächenbereich kann es sich beispielsweise um eine plane Fläche zur Umlenkung des auftreffenden Laserstrahls handeln, d.h. das reflektierende optische Element bildet einen Umlenkspiegel, dessen zweiter, äußerer Flächenbereich zur Begrenzung des Strahlquerschnitts des umgelenkten Laserstrahls dient.

Ein konvex gekrümmter erster Flächenbereich erzeugt aus dem kollimiert auftreffenden Strahlungsanteil einen divergenten ersten reflektierten Laserstrahls, was die Bildung einer Überlagerungs-Länge vereinfacht, da es in diesem Fall ausreichend sein kann, wenn der zweite Flächenbereich plan ausgebildet ist bzw. den zweiten reflektierten Laserstrahl weniger stark aufweitet als dies bei dem ersten reflektierten Laserstrahl der Fall ist.

Trifft der zweite reflektierte Laserstahl auf ein in Ausbreitungsrichtung des ersten Laserstrahls nachfolgendes reflektierendes optisches Element z.B. in Form eines Fokussierspiegels, wird der weniger stark aufgeweitete zweite Laserstrahl von dem Fokussierspiegel an einer Fokusposition fokussiert, die sich typischerweise vor der Fokusposition des ersten Laserstrahls befindet.

Bei einer weiteren Ausführungsform gehen der erste Flächenbereich und der zweite Flächenbereich stetig oder unstetig ineinander über. Das reflektierende optische Element kann beispielsweise zwei- oder mehrteilig ausgebildet sein, wobei ein jeweiliges Bauteil des mehrteiligen reflektierenden optischen Elements mindestens einen der Flächenbereiche aufweist. Hierdurch kann auf besonders einfache Weise ein unstetiger Übergang zwischen den Flächenbereichen realisiert werden. Es ist aber auch möglich, dass der erste Flächenbereich und der zweite Flächenbereich stetig ineinander übergehen. In diesem Fall ist das reflektierende optische Element bevorzugt einteilig ausgebildet, dies ist aber nicht zwingend erforderlich.

Das reflektierende optische Element ist derart ausgebildet bzw. an die Geometrie der Öffnung angepasst, dass der erste reflektierte Laserstrahl durch die Öffnung hindurch treten kann, ohne hierbei auf das Bauteil zu treffen. Der zweite reflektierte Laserstrahl verläuft entlang der Überlagerungs-Länge innerhalb des ersten reflektierten Laserstrahls. Auf diese Weise ist sichergestellt, dass ein auf das reflektierende optische Element auftreffender Laserstrahl, der einen zu großen Strahldurchmesser aufweist oder der ggf. aufgrund von Justagefehlern dezentriert ist, ohne Anstreifen durch die Öffnung hindurch tritt. Bei dem Bauteil, durch dessen Öffnung die beiden reflektierten Laserstrahlen hindurchtreten, ohne den Rand der Öffnung zu streifen, kann es sich beispielweise um ein Gehäuse bzw. ein Gehäuse-Bauteil, z.B. in Form einer Gehäusewand, oder um ein beliebiges anderes Bauteil handeln.

Bei einer Ausführungsform umfasst die Strahlführungseinrichtung eine Vakuum-Kammer mit einem Zielbereich, in der zur Erzeugung von EUV-Strahlung ein Target-Material einbringbar ist, wobei das reflektierende optische Element ausgebildet ist, die beiden reflektierten Laserstrahlen in Richtung auf den Zielbereich zu führen. Die Strahlführungseinrichtung bildet einen Teil einer EUV-Strahlungserzeugungseinrichtung. An dem Zielbereich wird ein Target-Material, beispielsweise in Form von Zinn-Tröpfchen, bereitgestellt, das bei der Bestrahlung mit dem Laserstrahl in einen Plasma-Zustand übergeht und hierbei EUV-Strahlung emittiert.

Es hat sich gezeigt, dass bei einer solchen EUV-Strahlungserzeugungseinrichtung Aberrationen entstehen können, wenn ein Teil der Laserleistung des auf das reflektierende optische Element auftreffenden Laserstrahls auf das umgebende Gehäuse bzw. auf den Rand einer Öffnung trifft, durch welche der auftreffende Laserstrahl in die Vakuum-Kammer mit dem Target-Material geführt wird. Derartige Aberrationen können sich ungünstig auf die Erzeugung der EUV-Strahlung in dem Zielbereich auswirken, weshalb das Auftreffen des Laserstrahls auf das Gehäuse verhindert werden sollte.

Bei einer Weiterbildung umfasst die Strahlführungseinrichtung ein fokussierendes, insbesondere reflektierendes optisches Element zur Fokussierung des ersten reflektierten Laserstrahls auf eine erste Fokusposition innerhalb des Zielbereichs und des zweiten reflektierten Laserstrahls auf eine zweite Fokusposition vor oder hinter dem Zielbereich.

Das reflektierende optische Element kann in diesem Fall beispielsweise als strahlaufweitendes optisches Element ausgebildet sein. Der zweite reflektierte Laserstrahl kann in diesem Fall beispielsweise divergent auf das reflektierend ausgebildete fokussierende optische Element, beispielsweise in Form eines Ellipsoid-Spiegels, auftreffen und wird aufgrund des kleineren Divergenz-Winkels im Vergleich zum ersten reflektierten Laserstrahl an einer zweiten Fokusposition fokussiert, die in Ausbreitungsrichtung vor dem Zielbereich mit der ersten Fokusposition liegt. Es versteht sich aber, dass auch der umgekehrte Fall möglich ist, d.h. dass der zweite reflektierte Laserstrahl an einer Fokusposition hinter dem Zielbereich fokussiert wird.

Bei der Strahlquelle kann es sich beispielsweise um eine Laserquelle handeln, z.B. um einen oder um mehrere CO₂-Laser, der/die einen oder ggf. mehrere gepulste Laserstrahlen (einer Folge von Laserpulsen) erzeugen. Der gepulste Laserstrahl wird typischerweise von mehreren optischen Verstärkern einer Verstärkeranordnung einer Treiberlaseranordnung verstärkt, so dass dieser mit einer erheblichen Leistung auf das reflektierende optische Element auftrifft.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein Ausführungsbeispiel einer EUV-Strahlungserzeugungseinrichtung mit einem reflektierenden optischen Element, auf das ein kollimierter Laserstrahl auftrifft,
- Fig. 2: eine Darstellung eines Gehäuse-Bauteils, in dem eine Öffnung gebildet ist, durch die ein erster und ein zweiter an einem reflektierenden optischen Element reflektierter Lichtstrahl hindurchtreten.

In der folgenden Beschreibung der Zeichnungen werden für gleiche bzw. funktionsgleiche Bauteile identische Bezugszeichen verwendet.

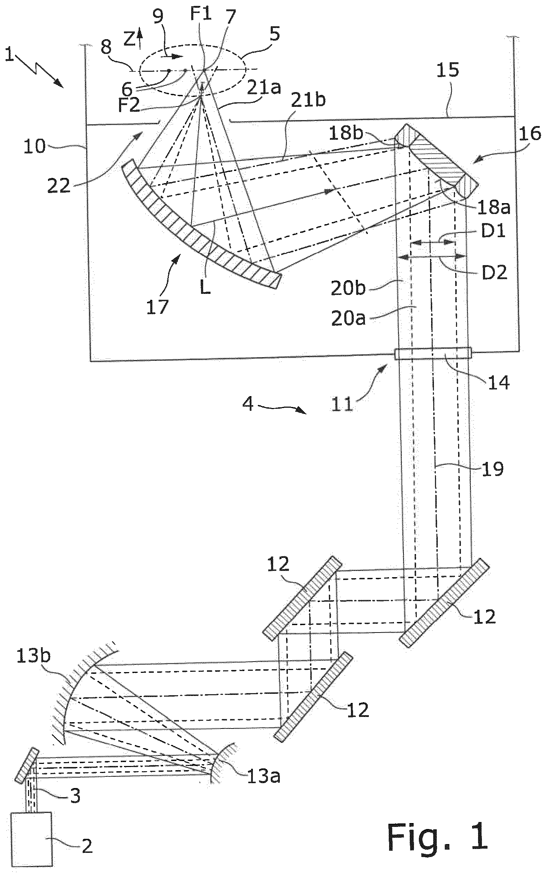

**Fig. 1** zeigt eine EUV-Strahlungserzeugungseinrichtung **1** mit einer Strahlquelle **2** in Form eines als CO₂-Laser ausgebildeten Treiberlasers, der einen gepulsten Laserstrahl **3** mit hoher Strahlungsleistung (>> 1 kW) erzeugt. Zur Erzeugung des Laserstrahls 3 mit hoher Strahlleistung kann die Strahlquelle 2 mehrere Verstärker umfassen. Der von dem CO₂-Laser erzeugte Laserstrahl 3 weist im gezeigten Beispiel eine Wellenlänge von ca. 10,6 µm auf.

Die EUV-Strahlungserzeugungseinrichtung 1 umfasst ferner eine Strahlführungseinrichtung **4** mittels derer der Laserstrahl 3 in Richtung auf einen Zielbereich **5** geführt wird, an dem ein Target-Material **6** in Form von Zinn-Tröpfchen eingebracht ist, um EUV-Strahlung **7** zu erzeugen. Auf die Darstellung von Messeinrichtungen zur Überwachung des Strahlengangs des Laserstrahls 3 wurde aus Gründen der Übersichtlichkeit verzichtet. Das Target-Material 6, d.h. die Zinn-Tröpfchen, werden mittels einer (nicht gezeigten) Bereitstellungseinrichtung erzeugt und dieses bewegt sich entlang einer vorgegebenen Bewegungsbahn **8** bzw. eines vorgegebenen Pfades, welche einer im Wesentlichen horizontalen, geradlinigen Bewegungsbahn in der Art einer Wurfparabel entspricht, entlang einer horizontalen Bewegungsrichtung **9.** Es versteht sich, dass die Bewegungsrichtung 9 auch einer anderen Richtung, z.B. der Schwerkraftrichtung, entsprechen kann.

Für die Erzeugung der EUV-Strahlung 7 wird das Target-Material 6 zunächst durch einen nicht gezeigten Vor-Puls, der von der Strahlquelle 2 oder von einer weiteren Strahlquelle erzeugt wird, beeinflusst, d.h. aufgeheizt, expandiert, vaporisiert, ionisiert und/oder in den Zustand eines schwachen oder ggf. eines starken Plasmas gebracht. Durch den Laserstrahl 3, welcher einen Haupt-Puls mit höherer Leistung bildet, wird der Hauptteil des von dem Vor-Puls beeinflussten Target-Materials 6 in den Plasmazustand überführt und hierbei die EUV-Strahlung 7 erzeugt.

Zur gezielten Ausrichtung bzw. Bündelung der auf diese Weise erzeugten EUV-Strahlung 7 umfasst die EUV-Strahlungserzeugungseinrichtung 1 einen (nicht gezeigten) EUV-Fokussierspiegel. Das Target-Material 6, der EUV-Fokussierspiegel und der Zielbereich 5, in dem das Target-Material 6 einbringbar ist, sind in einer Vakuum-Kammer **10** der Strahlführungseinrichtung 4 angeordnet, wohingegen die Strahlquelle 2 außerhalb der Vakuum-Kammer 10 angeordnet ist.

Um den Laserstrahl 3 in Richtung auf den Zielbereich 5 zu führen, wird der Laserstrahl 3 ausgehend von der Strahlquelle 2 über eine Öffnung **11** in die Vakuum-Kammer 10 geführt. Um den Laserstrahl 3 von der Strahlquelle 2 zu der Öffnung 11 zu führen, weist die Strahlführungseinrichtung 4 eine Mehrzahl von Umlenkspiegeln **12** sowie ein Paar von Parabolspiegeln **13a,b** auf, wobei letztere zur Änderung des Strahlquerschnitts des Laserstrahls 3 dienen. Zusätzlich oder alternativ zur Verwendung von Parabolspiegeln 13a,b können auch Ellipsoid- oder Hyperboloid-Spiegel zur Änderung des Strahlquerschnitts des Laserstrahls 3 dienen.

Die Öffnung 11 in der Vakuum-Kammer 10 ist gasdicht durch ein plattenförmiges optisches Element **14** in Form eines Fensters verschlossen. Der Zielbereich 5 der Vakuum-Kammer 10 ist über ein Gehäuse-Bauteil **15** in Form einer Zwischenwand von einer in der Vakuum-Kammer 10 angeordneten Fokussiereinheit getrennt, die eine reflektierendes optisches Element **16** in Form eines strahlaufweitenden Spiegels und ein weiteres reflektierendes optisches Element **17** in Form eines Ellipsoid-Spiegels aufweist.

Das reflektierende optische Element 16 ist im gezeigten Beispiel als facettierter Spiegel ausgebildet, d.h. dieser weist einen ersten, inneren Flächenbereich **18a** und einen zweiten, äußeren Flächenbereich **18b** auf, welcher den ersten, kreisförmigen Flächenbereich 18a ringförmig umgibt. Das reflektierende optische Element 16 bzw. die beiden Flächenbereiche 18a,b dienen als geometrischer Strahlteiler: Ein in Bezug auf eine Strahlachse **19** des auftreffenden Laserstrahls 3 radial innerer Strahlungsanteil **20a,** der auf den ersten Flächenbereich 18a auftrifft, wird an dem ersten Flächenbereich 18a in Form eines ersten Laserstrahls **21a** reflektiert. Entsprechend wird ein zweiter, in Bezug auf die Strahlachse 19 des Laserstrahls 3 radial außen liegender (ringförmiger) zweiter Strahlungsanteil **20b,** welcher auf den zweiten Flächenbereich 18b auftrifft, an dem zweiten Flächenbereich 18b reflektiert und bildet einen zweiten reflektierten Laserstrahl **21b.**

Der zweite Flächenbereich 18b ist ausgebildet, einen Strahlquerschnitt **D2** des zweiten reflektierten Laserstrahls 20b in Bezug auf den Strahlquerschnitt **D1** des ersten reflektierten Laserstrahls 20a zu reduzieren, so dass der zweite reflektierte Laserstrahl 20b entlang einer Überlagerungs-Länge **L,** die sich entlang der Strahlachse 19 des ersten reflektierten Laserstrahls 21a erstreckt, vollständig innerhalb des ersten reflektierten Laserstrahls 21a verläuft. Der an dem reflektierenden optischen Element 16 größere zweite Strahlquerschnitt D2 (bzw. Strahldurchmesser) des zweiten Strahlungsanteils 20b wird somit gegenüber dem an dem reflektierenden optischen Element 16 kleineren ersten Strahlquerschnitt D1 des ersten Strahlungsanteils 21a verringert, so dass der zweite reflektierte Laserstrahl 21b nach einer kurzen Propagations-Länge innerhalb des ersten reflektierten Laserstrahls 21b verläuft.

Eine an der Zwischenwand 15 gebildete Öffnung **22** befindet sich innerhalb der Überlagerungs-Länge L der beiden reflektierten Laserstrahlen 21a,b. Der zweite reflektierte Laserstrahl 21b, genauer gesagt dessen Strahlquerschnitt D2, liegt im Bereich der Öffnung 22 somit vollständig innerhalb des Strahlquerschnitts D1 des ersten reflektierten Laserstrahls 21a. Auf diese Weise kann verhindert werden, dass der zweite, radial außen liegende Strahlungsanteil 20b des auf das reflektierende optische Element 16 auftreffenden Laserstrahls 3 auf den Rand der Öffnung 22 auftrifft und das Gehäuse-Bauteil 15 in Form der Zwischenwand erwärmt, was zu Aberrationen bei der Erzeugung der EUV-Strahlung 7 führen kann.

Unabhängig davon, ob der auftreffende Laserstrahl 3 aufgrund einer Dejustage lateral versetzt und/oder nicht korrekt ausgerichtet auf das reflektierende optische Element 16 auftrifft oder ggf. einen zu großen Strahlquerschnitt aufweist, bleibt der Strahlquerschnitt D1 des reflektierten ersten Laserstrahls 21a unverändert, so dass dieser durch die Öffnung 22 hindurchtreten kann, ohne hierbei den Rand der Öffnung 22 zu streifen.

Bei dem in Fig. 1 gezeigten Beispiel ist der erste, innere Flächenbereich 18a des reflektierenden optischen Elements 16 als konvexe Paraboloid-Fläche ausgebildet, welche den ersten reflektierten Laserstrahl 21a aufweitet. Das weitere reflektierende optische Element 17 ist als Ellipsoid-Spiegel ausgebildet, welcher den ersten reflektierten Laserstrahl 21a auf eine erste Fokusposition **F1** in dem Zielbereich 5 fokussiert. Der zweite, äußere Flächenbereich 18b, der im gezeigten Beispiel unstetig an den ersten Flächenbereich 18a anschließt, ist (schwächer) konvex gekrümmt, um einen zweiten reflektierten Laserstrahl 21b mit einer geringeren Divergenz zu bilden als der erste, innere Flächenbereich 18a. Der zweite reflektierte Laserstrahl 21b wird von dem Ellipsoid-Spiegel 17 auf eine zweite Fokusposition **F2** fokussiert, die sich auf der Strahlachse 19 des ersten reflektierten Laserstrahls 21a vor dem Zielbereich 5 befindet. Es versteht sich, dass die zweite Fokusposition F2 sich nicht zwingend auf der Strahlachse 19 des ersten reflektierten Laserstrahls 21a befinden muss, sondern alternativ in der Nähe der Strahlachse 19 des ersten reflektierten Laserstrahls 21a liegen kann, d.h. die Strahlachsen der beiden reflektierten Laserstrahlen 21a,b müssen anders als dies in Fig. 1 gezeigt ist nicht zwingend übereinstimmen.

Der zweite reflektierte Laserstrahl 21b verläuft nach der zweiten Fokusposition F2 divergent und nach dem Ende der Überlagerungs-Länge L nicht mehr innerhalb des ersten reflektierten Laserstrahls 21b. Der zweite reflektierte Laserstrahl 21b wird hierbei so stark aufgeweitet, dass dieser in dem Zielbereich 5 keinen Einfluss mehr auf die Erzeugung der EUV-Strahlung 7 hat.

Im Strahlweg des zweiten reflektierten Laserstrahls 21b hinter dem Zielbereich 5 sind keine Bauteile angeordnet, die beim Auftreffen des zweiten reflektierten Laserstrahls 21b und dessen Reflexion bzw. bei einer Erwärmung einen negativen Einfluss auf die Erzeugung der EUV-Strahlung 7 haben. Alternativ zur Fokussierung des zweiten reflektierten Laserstrahls 21b auf eine Fokusposition F2 vor dem Zielbereich 5 kann der zweite reflektierte Laserstrahl 21b auch an eine Fokusposition F2 hinter dem Zielbereich 5 fokussiert werden, beispielsweise wenn der zweite Laserstrahl 21b mit Hilfe des zweiten Flächenbereichs 18b auf einen Zwischenfokus fokussiert wird, bevor dieser auf das weitere reflektierende optische Element 17 trifft.

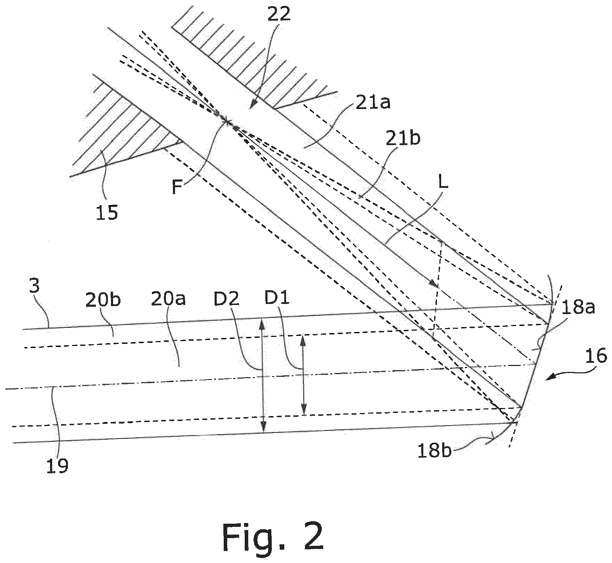

**Fig. 2** zeigt ein reflektierendes optisches Element 16, welches wie das in Fig. 1 gezeigte reflektierende optische Element 16 einen ersten und zweiten Flächenbereich 18a,b aufweist, um einen radial inneren bzw. äußeren Strahlungsanteil 20a, 20b eines einfallenden Lichtstrahls 3 auf zwei reflektierte Lichtstrahlen 21a, 21b aufzuteilen, die gemeinsam durch eine Öffnung 22 in einem Gehäuse-Bauteil 15 hindurch treten. Bei dem reflektierenden optischen Element 16 von Fig. 2 handelt es sich um einen Umlenkspiegel, der den kollimiert einfallenden Lichtstrahl 3 in Richtung auf die Öffnung 22 des Gehäuse-Bauteils 15 umlenkt.

Wie bei dem in Fig. 1 gezeigten Beispiel bildet der erste reflektierte Lichtstrahl 21a den Nutzstrahl, während der zweite reflektierte Lichtstrahl 21b dazu dient, den Strahldurchmesser D2 des radial außen liegenden Strahlungsanteils 20b des einfallenden Lichtstrahls 3 im Vergleich zum Strahldurchmesser D1 des ersten reflektierten Lichtstrahls 21a zu reduzieren, so dass der zweite reflektierte Lichtstrahl 21b innerhalb der Überlagerungs-Länge L vollständig innerhalb des ersten Lichtstrahls 21a verläuft. Die Öffnung 22 in dem Gehäuse-Bauteil 15 befindet sich wie in Fig. 1 innerhalb der Überlagerungs-Länge L, von der in Fig. 2 nur ein Abschnitt dargestellt ist, der sich von einem dem reflektierenden optischen Element 16 zugewandten Ende der Überlagerungs-Länge L in die Öffnung 22 hinein erstreckt.

Bei dem in Fig. 2 gezeigten Beispiel schließt der zweite, äußere Flächenbereich 18b stetig an den ersten, inneren Flächenbereich 18a an. Der zweite, äußere Flächenbereich 18b ist als konkav gekrümmte Paraboloid-Fläche ausgebildet, welche den zweiten, ringförmigen Lichtstrahl 21b auf eine Fokusposition F fokussiert, die wie bei dem in Fig. 1 gezeigten Beispiel auf der Strahlachse 19 des ersten reflektierten Lichtstrahls 21a liegt. Auf diese Weise verläuft der zweite reflektierte Lichtstrahl 21b im Bereich der Öffnung 22 innerhalb des ersten reflektierten Lichtstrahls 21a und trifft somit nicht auf das Gehäuse-Bauteil 15, wie dies der Fall wäre, wenn das reflektierende optische Element 16 vollständig als Planspiegel ausgebildet wäre, wie dies in Fig. 2 gestrichelt angedeutet ist.

Auch bei dem in Fig. 2 gezeigten Beispiel kann mit Hilfe des reflektierenden Elements 16 verhindert werden, dass der einfallende Lichtstrahl 3 auf das Gehäuse-Bauteil 15 auftrifft. Es versteht sich, dass das in Fig. 2 gezeigte reflektierende optische Element 16 in der in Fig. 1 gezeigten EUV-Strahlungserzeugungseinrichtung 1, aber auch in anderen optischen Anordnungen angeordnet werden kann, um zu verhindern, dass ein Lichtstrahl 3, insbesondere ein Laserstrahl, ungewollt - z.B. aufgrund einer fehlerhaften Justage - auf Bauteile auftrifft, die in der Nähe des Strahlengangs des zu reflektierenden Lichtstrahls 3 angeordnet sind.

## Patentansprüche

1. EUV-Strahlungserzeugungseinrichtung (1), umfassend:
eine Strahlquelle (2) zur Erzeugung eines Laserstrahls (3),
eine Strahlführungseinrichtung (4), umfassend:
mindestens ein reflektierendes optisches Element (16), das reflektierende optische Element (16) umfassend:
einen ersten, inneren Flächenbereich (18a) zur Reflexion eines ersten, inneren Strahlungsanteils (20a) des auf das reflektierende optische Element (16) auftreffenden Laserstrahls (3) zur Bildung eines ersten reflektierten Laserstrahls (21a), sowie
mindestens einen zweiten, äußeren Flächenbereich (18b) zur Reflexion mindestens eines zweiten, äußeren Strahlungsanteils (20b) des auftreffenden Laserstrahls (3) zur Bildung mindestens eines zweiten reflektierten Laserstrahls (21b),
**dadurch gekennzeichnet,**
**dass** der zweite Flächenbereich (18b) ausgebildet ist, einen Strahlquerschnitt (D2) des zweiten reflektierten Laserstrahls (21b) im Vergleich zu einem Strahlquerschnitt (D1) des ersten reflektierten Laserstrahls (21a) zu reduzieren, so dass der zweite reflektierte Laserstrahl (21b) entlang einer Überlagerungs-Länge (L) vollständig innerhalb des ersten reflektierten Laserstrahls (21a) verläuft, und
**dass** die Strahlführungseinrichtung (4) weiter umfasst: ein Bauteil (15), in dem eine Öffnung (22) gebildet ist, wobei die Öffnung (22) des Bauteils (15) sich innerhalb der Überlagerungs-Länge (L) befindet und das reflektierende optische Element derart an die Geometrie der Öffnung angepasst ist, dass der erste reflektierte Laserstrahl durch die Öffnung hindurch treten kann, ohne hierbei auf das Bauteil zu treffen.

2. EUV-Strahlungserzeugungseinrichtung nach Anspruch 1, bei dem der zweite Flächenbereich (18b) konkav, plan oder konvex gekrümmt ist.

3. EUV-Strahlungserzeugungseinrichtung nach Anspruch 1 oder 2, bei dem der zweite Flächenbereich (18b) zur Fokussierung des zweiten reflektierten Lichtstrahls (21b) auf eine Fokusposition (F2, F) ausgebildet ist, die bevorzugt innerhalb des ersten reflektierten Lichtstrahls (21a) liegt.

4. EUV-Strahlungserzeugungseinrichtung nach einem der vorhergehenden Ansprüche, bei dem der erste Flächenbereich (18a) konkav, plan oder konvex gekrümmt ist.

5. EUV-Strahlungserzeugungseinrichtung nach einem der vorhergehenden Ansprüche, bei dem der erste Flächenbereich (18a) und der zweite Flächenbereich (18b) stetig oder unstetig ineinander übergehen.

6. EUV-Strahlungserzeugungseinrichtung nach einem der vorhergehenden Ansprüche, bei dem die Strahlführungseinrichtung (4) weiter umfasst: eine Vakuum-Kammer (10) mit einem Zielbereich (5), in den zur Erzeugung von EUV-Strahlung (7) ein Target-Material (6) einbringbar ist, wobei das reflektierende optische Element (16) ausgebildet ist, die beiden reflektierten Laserstrahlen (21a,b) in Richtung auf den Zielbereich (5) zu führen.

7. EUV-Strahlungserzeugungseinrichtung nach Anspruch 6, bei der die Strahlführungseinrichtung (4) weiter umfasst: ein fokussierendes, insbesondere reflektierendes optisches Element (17) zur Fokussierung des ersten reflektierten Laserstrahls (21a) auf eine erste Fokusposition (F1) innerhalb des Zielbereichs (5) und des zweiten reflektierten Laserstrahls (21b) auf eine zweite Fokusposition (F2) vor oder hinter dem Zielbereich (5).

8. EUV-Strahlungserzeugungseinrichtung (1) nach einem der vorhergehenden Ansprüche, bei der die die Strahlführungseinrichtung (4) ausgebildet ist, den Laserstrahl (3) kollimiert auf das reflektierende optische Element (16) einzustrahlen.

## Claims

1. An EUV radiation generating device (1), comprising:
a beam source (2) for generating a laser beam (3),
a beam guiding device (4), comprising:
at least one reflective optical element (16), the reflective optical element (16) comprising:
a first, inner surface region (18a) for reflecting a first, inner radiation component (20a) of a laser beam (3) that is incident on the reflective optical element (16) to form a first reflected laser beam (21a), and
at least one second, outer surface region (18b) for reflecting at least one second, outer radiation component (20b) of the incident laser beam (3) to form at least one second reflected laser beam (21b),
**characterized**
**in that** the second surface region (18b) is embodied to reduce a beam cross section (D2) of the second reflected laser beam (21b) compared to a beam cross section (D1) of the first reflected laser beam (21a), so that the second reflected laser beam (21b) travels along a superposition length (L) completely within the first reflected laser beam (21a), and
**in that** the beam guiding device (4) further comprises: a component (15) in which an opening (22) is formed, wherein the opening (22) of the component (15) is located within the superposition length (L), and wherein the reflective optical element is adapted to the geometry of the opening in such a way that the first reflected laser beam can pass through the opening without being incident on the component.

2. The EUV radiation generating device as claimed in claim 1, in which the second surface region (18b) is concave, planar or convexly curved.

3. The EUV radiation generating device as claimed in claim 1 or 2, in which the second surface region (18b) is embodied to focus the second reflected light beam (21b) at a focus position (F2, F) that preferably lies within the first reflected light beam (21a).

4. The EUV radiation generating device as claimed in one of the preceding claims, in which the first surface region (18a) is concave, planar or convexly curved.

5. The EUV radiation generating device as claimed in one of the preceding claims, in which the first surface region (18a) and the second surface region (18b) merge continuously or discontinuously into one another.

6. The EUV radiation generating device as claimed in one of the preceding claims, wherein the beam guiding device further comprises: a vacuum chamber (10) with a target region (5) into which a target material (6) is able to be introduced for generating EUV radiation (7), wherein the reflective optical element (16) is embodied to guide the two reflected laser beams (21a,b) in the direction of the target region (5).

7. The EUV radiation generating device as claimed in claim 6, wherein the beam guiding device (4) further comprises: a focusing, in particular reflective optical element (17) for focusing the first reflected laser beam (21a) at a first focus position (F1) within the target region (5) and for focusing the second reflected laser beam (21b) at a second focus position (F2) upstream or downstream of the target region (5).

8. An EUV radiation generating device (1) as claimed in one of the preceding claims, wherein the beam guiding device (4) is embodied to radiate the laser beam (3) onto the reflective optical element (16) in a collimated manner.

## Revendications

1. Dispositif de génération de rayonnement EUV (1), comprenant :
une source de faisceau (2) pour générer un faisceau laser (3),
un dispositif de guidage de faisceau (4) comprenant :
au moins un élément optique réfléchissant (16), l'élément optique réfléchissant (16) comprenant :
une première zone de surface intérieure (18a) pour réfléchir une première partie de rayonnement intérieure (20a) du faisceau laser (3) incident sur l'élément optique réfléchissant (16) afin de former un premier faisceau laser réfléchi (21a), ainsi que au moins une deuxième zone de surface extérieure (18b) pour réfléchir au moins une deuxième partie de rayonnement extérieure (20b) du faisceau laser incident (3) afin de former au moins un deuxième faisceau laser réfléchi (21b),
**caractérisé en ce que**
la deuxième zone de surface (18b) est conçue pour réduire une section transversale de faisceau (D2) du deuxième faisceau laser réfléchi (21b) par rapport à une section transversale de faisceau (D1) du premier faisceau laser réfléchi (21a), de sorte que le deuxième faisceau laser réfléchi (21b) s'étend le long d'une longueur de superposition (L) entièrement à l'intérieur du premier faisceau laser réfléchi (21a), et
**en ce que** le dispositif de guidage de faisceau (4) comprend en outre : un composant (15) dans lequel une ouverture (22) est formée, l'ouverture (22) du composant (15) se trouvant à l'intérieur de la longueur de superposition (L) et l'élément optique réfléchissant étant adapté à la géométrie de l'ouverture de telle sorte que le premier faisceau laser réfléchi puisse passer à travers l'ouverture sans rencontrer le composant.

2. Dispositif de génération de rayonnement EUV selon la revendication 1, dans lequel la deuxième zone de surface (18b) est concave, plane ou convexe.

3. Dispositif de génération de rayonnement EUV selon la revendication 1 ou 2, dans lequel la deuxième zone de surface (18b) est conçue pour focaliser le deuxième faisceau de lumière réfléchi (21b) sur une position de focalisation (F2, F) qui est située de préférence à l'intérieur du premier faisceau de lumière réfléchi (21a).

4. Dispositif de génération de rayonnement EUV selon l'une des revendications précédentes, dans lequel la première zone de surface (18a) est concave, plane ou convexe.

5. Dispositif de génération de rayonnement EUV selon l'une des revendications précédentes, dans lequel la première zone de surface (18a) et la deuxième zone de surface (18b) se fondent l'une dans l'autre de manière continue ou discontinue.

6. Dispositif de génération de rayonnement EUV selon l'une des revendications précédentes, dans lequel le dispositif de guidage de faisceau (4) comprend en outre : une chambre à vide (10) avec une zone cible (5) dans laquelle un matériau cible (6) peut être introduit pour générer un rayonnement EUV (7), l'élément optique réfléchissant (16) étant conçu pour guider les deux faisceaux laser réfléchis (21a, b) en direction de la zone cible (5).

7. Dispositif de génération de rayonnement EUV selon la revendication 6, dans lequel le dispositif de guidage de faisceau (4) comprend en outre : un élément optique focalisant, en particulier réfléchissant (17) pour focaliser le premier faisceau laser réfléchi (21a) sur une première position de focalisation (F1) à l'intérieur de la zone cible (5) et le deuxième faisceau laser réfléchi (21b) sur une deuxième position de focalisation (F2) devant ou derrière la zone cible (5).

8. Dispositif de génération de rayonnement EUV (1) selon l'une des revendications précédentes, dans lequel le dispositif de guidage de faisceau (4) est conçu pour projeter le faisceau laser (3) de manière collimatée sur l'élément optique réfléchissant (16).
